# FASCICULE DE BREVET EUROPEEN

(11) **EP 3 483 415 B1**
(45) Date de publication et mention de la délivrance du brevet: **17.03.2021**
(21) Numéro de dépôt: 18199684.4
(22) Date de dépôt: 10.10.2018
(51) Int. Cl.: F02D 41/14, F01N 3/20, G01N 27/28, F02D 41/24

(54) **PROCÉDÉ DE SÉPARATION D'INFORMATIONS DE MESURE D'OXYDES D'AZOTE ET D'AMMONIAC**
VERFAHREN ZUR AUFSPALTUNG VON MESSDATEN VON STICKOXID UND AMMONIAK
METHOD FOR SEPARATING NITROGEN OXIDE AND AMMONIA MEASUREMENT INFORMATION

(30) Priorité: 10.11.2017 FR 1760562
(43) Date de publication de la demande: 15.05.2019
(73) Titulaire: PSA Automobiles SA, 78300 Poissy (FR)
(72) Inventeur: SUY, Dara, 92400 Courbevoie (FR)

(56) Documents cités:
- DE-A1-102004 046 640
- FR-A1- 3 007 795
- US-A1- 2010 028 230

## Description

L'invention concerne de manière générale la réduction des émissions polluantes d'oxydes d'azote d'un moteur thermique au moyen d'un système de réduction catalytique sélective. Plus particulièrement, l'invention se rapporte à un procédé de séparation d'informations de mesure d'oxydes d'azote et d'ammoniac contenues dans le signal de mesure fourni par une sonde de mesure d'oxydes d'azote (NOx) qui est placée en aval d'un catalyseur de réduction catalytique sélective dans une ligne d'échappement de moteur thermique.

Les véhicules à moteur thermique sont équipés de systèmes de post-traitement des gaz d'échappement conçus pour la réduction des émissions polluantes et le respect des normes environnementales. Dans un système de réduction catalytique sélective, dit SCR (de « Selective Catalytic Réduction » en anglais), le traitement des émissions d'oxydes d'azote (NOx) a lieu dans un catalyseur spécifique, dit catalyseur SCR, dans lequel se produisent des réactions d'oxydo-réduction conduisant à une réduction sélective des oxydes d'azote en azote et eau. L'agent réducteur classiquement utilisé est l'ammoniac (NH3). Un tel système est connu par exemple du document FR3007795A1. L'ammoniac est obtenu par dissociation d'une solution aqueuse d'urée qui est injectée dans la ligne d'échappement des gaz, en amont du catalyseur SCR. L'injection d'urée dans la ligne d'échappement est réglée au juste nécessaire et est commandée notamment en fonction de la quantité d'oxydes d'azote en sortie du moteur thermique, c'est-à-dire en amont du catalyseur SCR, et de la quantité d'oxydes d'azote en aval du catalyseur SCR. Un modèle d'estimation est fréquemment utilisé pour calculer la quantité d'oxydes d'azote en amont du catalyseur SCR. Une sonde de mesure d'oxydes d'azote, dite sonde NOx, est placée en aval du catalyseur SCR pour mesurer la quantité résiduelle d'oxydes d'azote dans les gaz sortant du catalyseur SCR et corriger en conséquence la commande du système SCR. La commande du système SCR doit également tenir compte d'un phénomène de désorption d'ammoniac et gérer un compromis entre l'efficacité de la réduction des oxydes d'azote et le relâchement d'ammoniac en sortie de la ligne d'échappement.

Dans les systèmes SCR actuels, la sonde NOx généralement utilisée présente une sensibilité à l'ammoniac et le signal de mesure délivrée par celle-ci contient donc une imprécision sur la mesure des oxydes d'azote due à la présence de l'ammoniac. Une mesure des oxydes d'azote plus précise autoriserait une meilleure exécution des fonctions utilisant celle-ci, telles que le dosage de l'injection durée, le diagnostic d'efficacité du système SCR, l'optimisation des réglages de combustion en fonction de l'efficacité du système SCR et autres. L'utilisation d'une sonde mesurant exclusivement les NOx pourrait être une solution pour résoudre techniquement l'inconvénient ci-dessus, mais une telle sonde a un coût économique non négligeable.

Par ailleurs, la mesure de la quantité d'ammoniac relâchée par le catalyseur SCR présente un intérêt certain, notamment pour corriger une dispersion ou une dérive du dispositif d'injection d'urée. Cependant, l'ajout d'une sonde de mesure spécifique pour l'ammoniac a aussi un impact sensible sur le coût du système SCR.

Il existe donc un besoin pour une solution nouvelle et économique autorisant des mesures de débit d'oxydes d'azote et d'ammoniac en aval d'un catalyseur SCR, afin d'améliorer les systèmes SCR existants et de répondre aux exigences des normes environnementales, notamment la norme environnementale européenne dite « euro 6.3 », avec une commande plus précise du système SCR et une meilleure maîtrise des rejets polluants.

L'invention concerne un procédé de séparation d'une information de mesure de débit d'oxydes d'azote et d'une information de mesure de débit d'ammoniac contenues dans une information de mesure de débit brute fournie par une sonde de mesure d'oxydes d'azote, la sonde étant placée en aval d'un catalyseur de réduction catalytique sélective dans une ligne d'échappement de gaz d'un moteur thermique. Conformément à l'invention, le procédé comporte les étapes suivantes :
- a) déterminer, à l'aide d'une cartographie et d'une boucle adaptative, un facteur d'équivalence entre un débit d'oxydes d'azote et un débit d'ammoniac dans la mesure de la sonde, la sonde ayant des sensibilités de mesure différentes pour les oxydes d'azote et pour l'ammoniac, le facteur d'équivalence étant adapté à chaque occurrence de calcul de l'information de mesure de débit d'oxydes d'azote en fonction d'au moins une valeur calculée précédente de l'information de mesure de débit d'oxydes d'azote, un rapport entre une concentration de dioxydes d'azote et une concentration d'oxydes d'azote et un débit des gaz d'échappement,
- b) calculer l'information de mesure de débit d'ammoniac en appliquant le facteur d'équivalence à une différence entre l'information de mesure de débit brute et une estimation de débit d'oxydes d'azote en aval du catalyseur de réduction catalytique sélective, et
- c) calculer l'information de mesure de débit d'oxydes d'azote par une différence entre l'information de mesure de débit brute et l'information de mesure de débit d'ammoniac à laquelle a été appliquée le facteur d'équivalence.

Selon une caractéristique particulière du procédé, la différence entre l'information de mesure de débit brute et une estimation de débit d'oxydes d'azote en aval du catalyseur de réduction catalytique sélective est divisée par le facteur d'équivalence.

Selon une autre caractéristique particulière du procédé, à l'étape c), l'information de mesure de débit d'ammoniac est multipliée par le facteur d'équivalence.

Selon encore une autre caractéristique particulière, le procédé comprend également une étape de filtrage passe-bas pour filtrer l'information de mesure de débit d'oxydes d'azote calculée à l'étape c).

Selon encore une autre caractéristique particulière, le procédé comprend également une étape de commutation délivrant en sortie l'information de mesure de débit d'oxydes d'azote ou l'estimation de débit d'oxydes d'azote selon que la sonde de mesure d'oxydes d'azote délivre une information de mesure brute valide ou pas.

D'autres avantages et caractéristiques de la présente invention apparaîtront plus clairement à la lecture de la description détaillée ci-dessous d'une forme de réalisation particulière de l'invention, en référence aux dessins annexés, dans lesquels :
- la Fig.1 montre de manière partielle un exemple d'un système de post-traitement de gaz d'échappement comprenant un catalyseur SCR et un calculateur de commande comprenant un module logiciel embarqué pour la mise en œuvre du procédé de l'invention ;
- les Figs.2A et 2B montrent sous forme de blocs-diagrammes des algorithmes de traitements effectués par le module logiciel embarqué pour la séparation des informations de mesure d'oxydes d'azote et d'ammoniac contenues dans le signal de mesure fourni par une sonde NOx en aval du catalyseur SCR de la Fig.1.

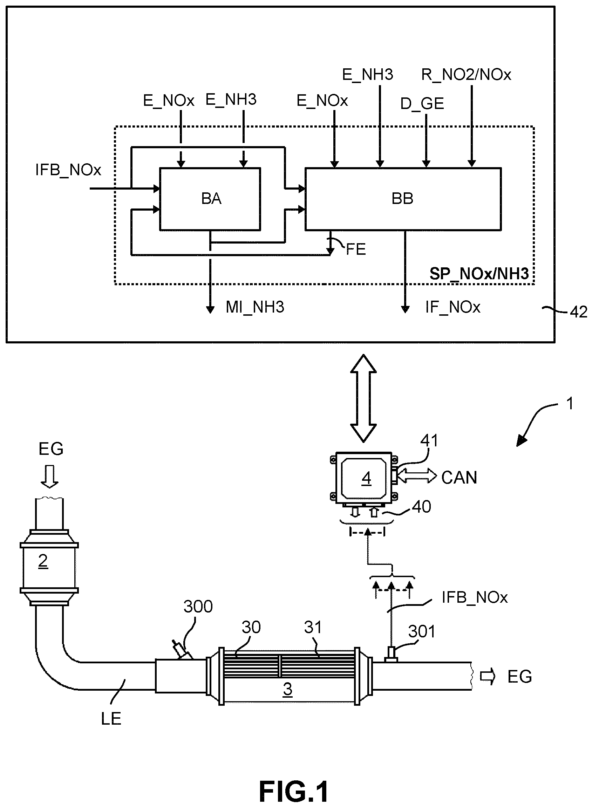

Une ligne d'échappement de gaz LE comprenant un système de post-traitement de gaz d'échappement 1 dans lequel est mis en œuvre le procédé selon l'invention pour la mesure des quantités de NOx et NH3 en aval d'un catalyseur SCR 30 est montré de manière partielle à la Fig.1. Dans cette forme de réalisation particulière, le système de post-traitement de gaz d'échappement 1 est destiné au post-traitement des gaz d'échappement EG d'un moteur thermique de type Diesel.

Comme montré à la Fig.1, le système de post-traitement de gaz d'échappement 1 comprend essentiellement une ligne d'échappement de gaz LE et une unité électronique de commande 4. La ligne d'échappement de gaz LE comprend ici un catalyseur d'oxydation 2 et un dispositif compact 3 de réduction catalytique sélective et de filtrage de particules de suies. Le catalyseur d'oxydation 2 est typiquement un catalyseur d'oxydation de type DOC (pour « Diesel Oxydation Catalyst » en anglais).

Le dispositif compact 3 comprend un catalyseur SCR 30 et un filtre à particules 31. Le catalyseur SCR 30 détruit les Nox en les faisant réagir avec le NH3 comme agent réducteur. Le NH3 est contenu dans une solution aqueuse d'urée, telle que l'AdBlue (marque déposée), introduite dans la ligne d'échappement de gaz LE par l'injecteur 300. Une sonde NOx 301 est prévue en aval du catalyseur SCR 30, ici dans la ligne d'échappement de gaz LE en sortie du dispositif compact 3, notamment pour la commande du catalyseur SCR 30.

L'unité électronique de commande 4 est ici le calculateur de commande moteur du véhicule. Le calculateur 4 comporte notamment un port d'entrée/sortie 40 à travers lequel transitent les différents signaux nécessaires à la commande des composants fonctionnels du système de post-traitement de gaz d'échappement 1 et un port de communication 41 avec un réseau CAN du véhicule. Une information de mesure brute IFB_NOx délivrée par la sonde NOx 301 est fournie ici au calculateur 4 à travers le port d'entrée/sortie 40.

L'information de mesure brute IFB_NOx est une mesure de débit et est composée de la somme de deux informations de mesure de débit qui sont désignées ci-après IF_NOx et IF_NH3. L'information de mesure IF_NOx est représentative du débit de NOx en aval du catalyseur SCR 30. L'information de mesure IF_NH3 est représentative du débit de NH3 en aval du catalyseur SCR 30. Le procédé selon l'invention permet d'extraire l'information de mesure IF_NOx de l'information de mesure brute IFB_NOx et fournit une information de mesure indirecte, désignée ci-après MI_NH3, du débit de NH3 en aval du catalyseur SCR 30.

Comme montré à la Fig.1, un module logiciel dédié SP_NOx/NH3 est implanté dans la mémoire 42 du calculateur 4 pour la mise en œuvre du procédé selon l'invention par l'exécution d'instructions de code de programme par un processeur du calculateur 4. Le module logiciel dédié SP_NOx/NH3 comporte deux blocs de traitement BA et BB qui calculent respectivement l'information de mesure indirecte MI_NH3 relative au débit de NH3 en aval du catalyseur SCR 30 et l'information de mesure IF_NOx représentative du débit de NOx en aval du catalyseur SCR 30.

Le module logiciel SP_NOx/NH3 utilise essentiellement en entrée l'information de mesure brute IFB_NOx délivrée par la sonde NOx 301, des estimations E_NOx et E_NH3 respectivement du débit de NOx et du débit de NH3 en aval du catalyseur SCR 30, le débit D_GE des gaz d'échappement et un rapport R_NO2/NOx entre la concentration des dioxydes d'azote (NO2) et la concentration des NOx. On notera que les estimations de débit E_NOx et E_NH3, le débit D_GE des gaz d'échappement et le rapport R_NO2/NOx pourront être obtenues par des procédés connus faisant appel par exemple à des modèles d'estimation, des cartographies et autres. Ces informations E_NOx, E_NH3, D_GE et R_NO2/NOx sont fréquemment déjà disponibles dans les calculateurs de commande moteur à d'autres fins, pour des stratégies de commande.

L'information de mesure brute IFB_NOx, les estimations de débit E_NOx et E_NH3 et un facteur d'équivalence FE délivré par le bloc de traitement BB sont fournis en entrée au bloc de traitement BA.

L'information de mesure brute IFB_NOx, les estimations de débit E_NOx et E_NH3, le débit D_GE des gaz d'échappement et le rapport R_NO2/NOx sont fournis en entrée au bloc de traitement BB.

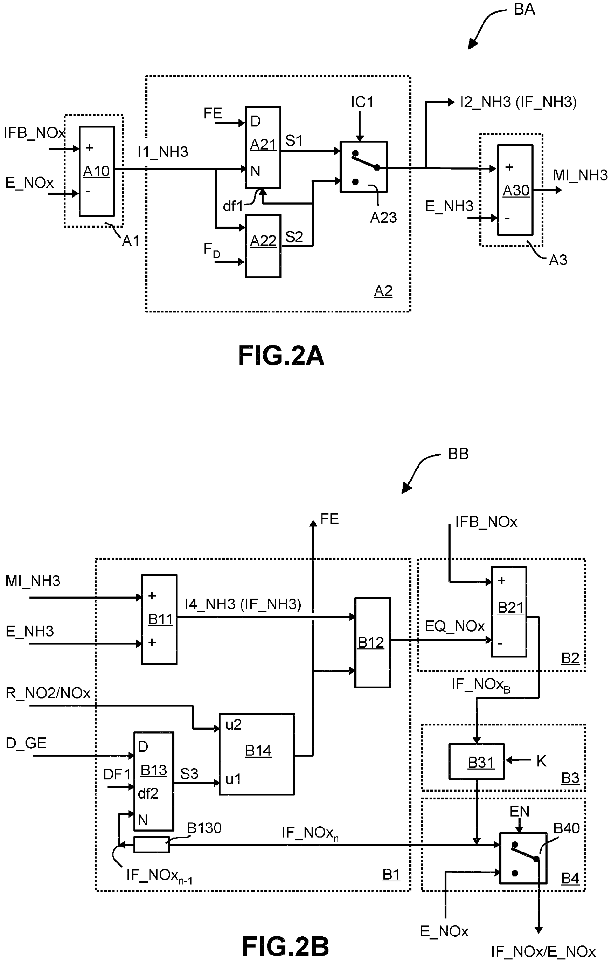

En référence également aux Figs.2A et 2B, il est maintenant décrit ci-dessous les algorithmes de traitement effectués par les blocs BA et BB.

Comme montré à la Fig.2A, le bloc de traitement BA comprend essentiellement trois étapes de traitement A1 à A3.

A l'étape A1, l'estimation de débit E_NOx est soustraite par un opérateur de soustraction A10 à l'information de mesure brute IFB_NOx et il est obtenu une information I1_NH3. Le traitement considère que l'information I1_NH3 est représentative de l'information de mesure IF_NH3 contenue dans l'information de mesure brute IFB_NOx délivrée par la sonde NOx 301.

L'étape A2 concerne l'application du facteur d'équivalence FE à l'information I1_NH3. La sonde NOx 301 mesure les deux espèces chimiques NOx et NH3 avec des précisions différentes et traite le NH3 comme s'il s'agissait de NOx. Il est donc nécessaire d'appliquer le facteur d'équivalence FE pour faire correspondre l'information I1_NH3 à une mesure de NH3. Le facteur d'équivalence FE contient également la conversion de la masse molaire de NOx en masse molaire de NH3. Le facteur d'équivalence FE à appliquer est déterminé dans le bloc BB décrit plus bas.

A l'étape A2, l'information I1_NH3 est appliquée à une entrée de numérateur (N) d'un opérateur de division A21 et le facteur d'équivalence FE est appliqué à une entrée de dénominateur (D) de celui-ci. Une division de l'information I1_NH3 par le facteur d'équivalence FE est ainsi réalisée et le résultat de cette opération est délivré par la sortie S1 de l'opérateur A21.

La division effectuée par l'opérateur A21 est sécurisée pour éviter une division par zéro. Pour cela, il est prévu un opérateur de multiplication A22 qui applique un facteur multiplicatif de défaut F_{D} à l'information I1_NH3. Le résultat (I1_NH3 x F_{D}) de cette opération, fourni par une sortie S2 de l'opérateur A22, est appliqué à une entrée de valeur de défaut df1 de l'opérateur A21 qui le délivre à sa sortie S1 en cas d'erreur de division par zéro.

Un commutateur A23 commandé par une information IC1 est également prévu pour désactiver si nécessaire la correction avec le facteur d'équivalence FE. Le commutateur A23 est typiquement de type calibrable avec un seuil de commutation réglable appliqué à l'information IC1. Lorsque la correction est activée et qu'il n'y a pas de défaut de division par zéro, l'étape A2 fournit en sortie une information de mesure I2_NH3 = (I1_NH3 / FE) = IF_NH3. Dans le cas contraire, l'étape A2 fournit une valeur l'information I2_NH3 = (I1_NH3 x F_{D}).

A l'étape A3, l'estimation de débit E_NH3 est soustraite par un opérateur de soustraction A30 à l'information I2_NH3 et il est obtenu l'information de mesure indirecte MI_NH3. Cette information de mesure indirecte MI_NH3 représente un écart sur la prédiction de NH3 en aval du catalyseur SCR 30 et quantifie une dispersion ou une dérive du système d'injection d'urée. L'information de mesure indirecte MI_NH3 pourra être utilisée comme donnée d'entrée de fonctions de correction.

Comme montré à la Fig.2B, le bloc de traitement BB comprend essentiellement quatre étapes de traitement B1 à B4. La fonction principale du bloc BB est de délivrer l'information de mesure IF_NOx représentative du débit de NOx en aval du catalyseur SCR 30. Comme indiqué précédemment, la mesure brute IFB_NOx des NOx par la sonde NOx 301 est polluée par la présence de NH3. La correction de cette mesure brute IFB_NOx en retranchant l'estimation de NH3, E_NH3, n'est pas suffisante car la sonde NOx 301 ne mesure pas les NOX et le NH3 avec la même sensibilité. Il est donc nécessaire de calculer une équivalence entre un débit d'oxydes d'azote et un débit d'ammoniac dans une mesure de la sonde NOx. L'invention met en œuvre dans le bloc de traitement BB une cartographie et une boucle adaptative pour déterminer et adapter le facteur d'équivalence FE à chaque occurrence de calcul de l'information de mesure IF_NOx.

L'étape B1 calcule une quantité équivalente de NOx, EQ_NOx, qui représente la contribution du NH3 dans l'information de mesure brute IFB_NOx.

L'opérateur de somme B11 additionne l'estimation E_NH3 et l'information de mesure indirecte MI_NH3 calculée par le bloc de traitement BA, de manière à obtenir une information I4_NH3 représentative d'un débit total de NH3 au niveau de la sonde NOx 301, c'est-à-dire équivalente à l'information de mesure IF_NH3.

L'information I4_NH3 est fournie en entrée à un opérateur de multiplication B12. L'opérateur de multiplication B12 reçoit à une autre entrée le facteur d'équivalence FE et délivre en sortie l'information EQ_NOx représentant la quantité équivalente de NOx.

Un opérateur de division B13 et une cartographie B14 sont inclus dans la boucle adaptative qui détermine la valeur du facteur d'équivalence FE à appliquer.

En considérant que le pas courant n du traitement du bloc BB calcule l'occurrence IF_NOxₙ de l'information de mesure IF_NOx, l'occurrence précédente de celle-ci calculée lors du pas n-1 précédent est IF_NOxₙ₋₁. Un stockage dans une mémoire tampon B130 de IF_NOxₙ₋₁ est montrée à la Fig.2B.

L'information de mesure IF_NOxₙ₋₁ est appliquée à une entrée de numérateur (N) de l'opérateur de division B13 et le débit D_GE des gaz d'échappement est appliqué à une entrée de dénominateur (D) de celui-ci. Une division de l'information de mesure IF_NOxₙ₋₁ par le débit D_GE est ainsi réalisée et le résultat de cette opération est délivré par la sortie S3 de l'opérateur B13 à une première entrée u1 de la cartographie B14. On notera qu'une valeur de défaut DF1 est fournie à une entrée de défaut df2 de l'opérateur B13, notamment pour le cas d'une erreur de division par zéro.

La cartographie B14 est une cartographie 2D, c'est-à-dire à deux dimensions, et comprend une deuxième entrée u2 à laquelle est fourni le rapport R_NO2/NOx. La cartographie B14 délivre en sortie le facteur d'équivalence FE, correspondant aux valeurs des informations IF_NOxₙ₋₁ et R_NO2/NOx, qui est fourni en entrée à l'opérateur de multiplication B12 et au bloc de traitement BA.

L'information EQ_NOx, représentant la quantité équivalente de NOx, délivrée par l'opérateur B12 est fournie à une entrée négative d'un opérateur de soustraction B21 de l'étape B2. Une entrée positive de l'opérateur de soustraction B21 reçoit l'information de mesure brute IFB_NOx. L'opérateur de soustraction B21 délivre en sortie une information de mesure IF_NOx brute, désignée IF_NOx_{B}.

L'information de mesure IF_NOx_{B} est filtrée à l'étape B2, par un filtre passe-bas B31 ayant une constante de temps K qui élimine les oscillations sur l'information et délivre l'information de mesure IF_NOx qui est la mesure fournie par l'invention du débit de NOx en aval du catalyseur SCR 30.

L'information de mesure IF_NOx fournie par l'algorithme du bloc de traitement BB n'est valide que si la sonde NOx 301 est active. L'état actif de la sonde NOx 301 est indiqué par l'information EN qui commande à l'étape B4 un commutateur B40. Le commutateur B40 délivre en sortie l'information de mesure IF_NOx lorsque la sonde NOx 301 est active et l'estimation E_NOx lorsque celle-ci est inactive.

L'invention ne se limite pas à la forme de réalisation particulière qui a été décrite ici à titre d'exemple. L'homme du métier, selon les applications de l'invention, pourra y apporter différentes modifications et variantes qui entrent dans la portée des revendications ci-annexées.

## Revendications

1. Procédé de séparation d'une information de mesure de débit d'oxydes d'azote (IF_NOx) et d'une information de mesure de débit d'ammoniac (IF_NH3) contenues dans une information de mesure de débit brute (IFB_NOx) fournie par une sonde de mesure d'oxydes d'azote (301), ladite sonde (301) étant placée en aval d'un catalyseur de réduction catalytique sélective (30) dans une ligne d'échappement de gaz (LE) d'un moteur thermique, **caractérisé en ce qu'**il comporte les étapes suivantes :
- a) déterminer, à l'aide d'une cartographie (B14) et d'une boucle adaptative, un facteur d'équivalence (FE) entre un débit d'oxydes d'azote et un débit d'ammoniac dans la mesure de ladite sonde (301), ladite sonde (301) ayant des sensibilités de mesure différentes pour les oxydes d'azote (NOx) et pour l'ammoniac (NH3), ledit facteur d'équivalence (FE) étant adapté à chaque occurrence de calcul (IF_NOXₙ) de ladite information de mesure de débit d'oxydes d'azote (IF_NOX) en fonction d'au moins une valeur calculée précédente (IF_NOXₙ₋₁) de ladite information de mesure de débit d'oxydes d'azote, un rapport (R_NO2/NOx) entre une concentration de dioxydes d'azote et une concentration d'oxydes d'azote et un débit (D_GE) des gaz d'échappement,
- b) calculer ladite information de mesure de débit d'ammoniac (IF_NH3) en appliquant ledit facteur d'équivalence (FE) à une différence (A10, I1_NH3) entre ladite information de mesure de débit brute (IFB_NOx) et une estimation de débit d'oxydes d'azote (E_NOx) en aval dudit catalyseur de réduction catalytique sélective (30), et
- c) calculer ladite information de mesure de débit d'oxydes d'azote (IF_NOx) par une différence (B21, IF_NOx_{B}) entre ladite information de mesure de débit brute (IFB_NOx) et ladite information de mesure de débit d'ammoniac (IF_NH3, I4_NH3) à laquelle a été appliquée ledit facteur d'équivalence (FE).

2. Procédé selon la revendication 1, **caractérisé en ce que**, à l'étape a) ledit facteur d'équivalence (FE) est fourni par une cartographie à deux dimensions (B14) dont une première entrée (u1) reçoit un rapport entre ladite valeur calculée précédente (IF_NOXₙ₋₁) de ladite information de mesure de débit d'oxydes d'azote et ledit débit (D_GE) des gaz d'échappement et une deuxième entrée (u2) reçoit ledit rapport (R_NO2/NOx) entre une concentration de dioxydes d'azote et une concentration d'oxydes d'azote.

3. Procédé selon la revendication 1 ou 2, **caractérisé en ce que**, à l'étape b), ladite différence (A10, I1_NH3) entre ladite information de mesure de débit brute (IFB_NOx) et une estimation de débit d'oxydes d'azote (E_NOx) en aval dudit catalyseur de réduction catalytique sélective (30) est divisée (A21) par ledit facteur d'équivalence (FE).

4. Procédé selon l'une quelconque des revendications 1 à 3, **caractérisé en ce que**, à l'étape c), ladite information de mesure de débit d'ammoniac (IF_NH3, I4_NH3) est multipliée (B12) par ledit facteur d'équivalence (FE).

5. Procédé selon l'une quelconque des revendications 1 à 4, **caractérisé en ce qu'**il comprend également une étape de filtrage passe-bas (B31) pour filtrer ladite information de mesure de débit d'oxydes d'azote (IF_NOx_{B}) calculée à l'étape c).

6. Procédé selon l'une quelconque des revendications 1 à 5, **caractérisé en ce qu'**il comprend également une étape de commutation (B40) délivrant en sortie ladite information de mesure de débit d'oxydes d'azote (IF_NOx) ou ladite estimation de débit d'oxydes d'azote (E_NOx) selon que ladite sonde de mesure d'oxydes d'azote (301) délivre une information de mesure brute valide ou pas (EN).

## Patentansprüche

1. Verfahren zur Stickoxidfließ Meßinformation Trenn (IF_NOx) und Ammoniak Strömungs Meßinformation (IF_NH3) in enthaltenen Rohfluß Meßinformation (IFB_NOx) durch ein Stickoxid - Meßsonde geliefert (301), wobei die Sonde (301) ein nachgeschalteten gelegt selektiven katalytischer Reduktionskatalysator (30) in einer Gasabgasleitung (LE) einer Wärmekraftmaschine, **gekennzeichnet dadurch, dass** er die folgenden Schritte umfasst:
- a) Bestimmen unter Verwendung einer Abbildung (B14) und einer adaptiven Schleife einen Äquivalenzfaktor (FE) zwischen einer Flussrate von Stickoxiden und einer Flussrate von Ammoniak bei der Messung der Sonde (301), wobei die Sonde (301) unterschiedliche Messungen aufweist Empfindlichkeiten für Stickoxide (NOx) und für Ammoniak (NH3), wobei der Äquivalenzfaktor (FE) an jedes Berechnungsereignis (IF_NOXₙ) der Informationen angepasst wird, um die Flussrate von Stickoxiden (IF_NOX) als Funktion von mindestens zu messen ein zuvor berechneter Wert (IF_NOXn-1) dieser Information zum Messen der Durchflussrate von Stickoxiden, ein Verhältnis (R_NO2 / NOx) zwischen einer Konzentration von Stickstoffdioxid und einer Konzentration von Stickoxiden und einer Durchflussrate (D_GE) des Abgases Gase,
- b) Berechnen des Ammoniakflusses Meßinformation (IF_NH3) durch den Äquivalenzfaktor Anwendung (FE) auf eine Differenz (A10, I1_NH3) zwischen dem Rohfluß Meßinformation (IFB_NOx) und einer Schätzung der Strömungsrate von Stickstoffoxiden (E_NOx) stromabwärts des Katalysators selektive katalytische Reduktion (30) und
- c) Berechnen der Information zur Messung der Durchflussrate von Stickoxiden (IF_NOx) durch eine Differenz (B21, IF_NOx_{B}) zwischen der Information zur Messung der Rohflussrate (IFB_NOx) und der Information zur Messung des Ammoniakflusses (IF_NH3, I4_NH3) auf die der Äquivalenzfaktor (FE) angewendet wurde.

2. Verfahren nach Anspruch 1, **dadurch gekennzeichnet, dass** in Schritt a) der Äquivalenzfaktor (FE) durch eine zweidimensionale Abbildung (B14) bereitgestellt wird, deren erste Eingabe (u1) ein Verhältnis zwischen dem zuvor berechneten Wert (IF_NOXₙ₋₁) der Informationen zur Messung der Stickoxidströmungsrate und der Abgasströmungsrate (D_GE) und eines zweiten Eingangs (u2) erhält das Verhältnis (R_NO2 / NOx) zwischen einer Konzentration von Stickstoffdioxid und einer Konzentration von Stickoxiden.

3. Verfahren nach Anspruch 1 oder 2, **dadurch gekennzeichnet, dass** in Schritt b) die Differenz (A10, 11_NH3) zwischen den Informationen zur Messung der Rohdurchflussrate (IFB_NOx) und einer Schätzung der Stickoxid-Durchflussrate (E_NOx) stromabwärts des Katalysators für Die selektive katalytische Reduktion (30) wird durch den Äquivalenzfaktor (FE) geteilt (A21).

4. Verfahren nach einem der Ansprüche 1 bis 3, **dadurch gekennzeichnet, dass** in Schritt c), wobei die Ammoniakstrom Meßinformation (IF_NH3, I4_NH3) multipliziert wird (B12), die durch den Äquivalenzfaktor (FE).

5. Verfahren nach einem der Ansprüche 1 bis 4, **dadurch gekennzeichnet, dass** sie ferner einen Tiefpassfilterschritt (B31) zum Filtern des Stickstoffoxid Strömungsrate Meßinformation (IF_NOx_{B}) in Schritt c) berechnet.

6. Verfahren nach einem der Ansprüche 1 bis 5, **dadurch gekennzeichnet, dass** es auch einen Schaltschritt (B40) umfasst, der am Ausgang die Informationen zum Messen der Flussrate von Stickoxiden (IF_NOx) oder der Flussschätzung liefert. Stickoxide (E_NOx) abhängig davon, ob die Stickoxid-Messsonde (301) gültige Rohmessinformationen liefert oder nicht (EN).

## Claims

1. Method of separating nitrogen oxide flow measurement information (IF_NOx) and ammonia flow measurement information (IF_NH3) contained in raw flow measurement information (IFB_NOx) supplied by a nitrogen oxide measurement probe (301), said probe (301) being placed downstream of a selective catalytic reduction catalyst (30) in a gas exhaust line (LE) of a heat engine, **characterized in that** it comprises the following steps :
- a) determine, using mapping (B14) and an adaptive loop, an equivalence factor (FE) between a flow of nitrogen oxides and a flow of ammonia in the measurement of said probe (301), said probe (301) having different measurement sensitivities for nitrogen oxides (NOx) and for ammonia (NH3), said equivalence factor (FE) being adapted to each occurrence of calculation (IF_NOXₙ) of said nitrogen oxide flow rate measurement information (IF_NOX) as a function of at least one previous calculated value (IF_NOXₙ₋₁) of said nitrogen oxides flow rate measurement information, a ratio (R_NO2 / NOx) between a nitrogen dioxide concentration and a nitrogen oxide concentration and a flow rate (D_GE) of the gases d 'exhaust,
- b) calculating said ammonia flow measurement information (IF_NH3) by applying said equivalence factor (FE) to a difference (A10, I1_NH3) between said raw flow measurement information (IFB_N Ox) and an estimate of flow rate of nitrogen oxides (E_NOx) downstream of said catalyst selective catalytic reduction (30), and
- c) calculating said information of measurement of flow rate of nitrogen oxides (IF_NOx) by a difference (B21, IF_NOx_{B}) between said information of measurement of raw flow rate (IFB_NOx) and said information of measurement of ammonia flow (IF_NH3, I4_NH3) to which the said equivalence factor (FE) has been applied.

2. Method according to claim 1, **characterized in that**, in step a) said equivalence factor (FE) is provided by a two-dimensional map (B14), a first input (u1) of which receives a ratio between said value previous calculated (IF_NOXₙ₋₁) of said nitrogen oxide flow rate measurement information and said exhaust gas flow rate (D_GE) and a second input (u2) receives said ratio (R_NO2 / NOx) between a concentration of nitrogen dioxide and a concentration of nitrogen oxides.

3. Method according to claim 1 or 2, **characterized in that**, in step b), said difference (A10, I1_NH3) between said raw flow rate measurement information (IFB_NOx) and an estimate of nitrogen oxide flow rate (E_NOx) downstream of said catalyst for selective catalytic reduction (30) is divided (A21) by said equivalence factor (FE).

4. Method according to any one of claims 1 to 3, **characterized in that**, in step c), said ammonia flow measurement information (IF_NH3, I4_NH3) is multiplied (B12) by said equivalence factor (FE).

5. Method according to any one of claims 1 to 4, **characterized in that** it also comprises a low-pass filtering step (B31) for filtering said nitrogen oxide flow rate measurement information (IF_NOx_{B}) calculated at step c).

6. Method according to any one of claims 1 to 5, **characterized in that** it also comprises a switching step (B40) delivering at output the said information for measuring the flow rate of nitrogen oxides (IF_NOx) or the said flow estimate nitrogen oxides (E_NOx) depending on whether said nitrogen oxides measurement probe (301) delivers raw measurement information valid or not (EN).
